# EUROPÄISCHE PATENTANMELDUNG

(11) **EP 1 001 260 A1**
(43) Veröffentlichungstag der Anmeldung: **17.05.2000**
(21) Anmeldenummer: 99121749.8
(22) Anmeldetag: 03.11.1999
(51) Int. Cl.: G01N 27/22

(54) **Kapazitive Sensoranordnung für ein als Dielektrikum wirkendes flüssiges oder gasförmiges Medium**

(30) Priorität: 06.11.1998 DE 19851213
(71) Anmelder: DaimlerChrysler AG, 70567 Stuttgart (DE)
(72) Erfinder: Irion, Eckard, 71111 Waldenbuch (DE)
(74) Vertreter: Kolb, Georg

(57) **Zusammenfassung**

Es wird eine kapazitive Sensoranordnung für ein als Dielektrikum wirkendes flüssiges oder gasförmiges Medium vorgestellt, die einerseits leicht und kostengünstig herstellbar ist und andererseits eine genaue Messung gewährleistet. Grundgedanke dabei ist es, die Kondensatorbeläge auf einer flexiblen Leitfolie anzuordnen, die zumindest zwischen den Kondensatorbelägen einen flexibel biegsamen Bereich aufweist, so daß die Leitfolie gegebenenfalls beidseitig in einer Ebene mit den Kondensatorbelägen und weiteren Elementen, insbesondere Leitbahnen und Bauelementen, versehen werden kann. Nachfolgend wird die Leitfolie U- bzw. S oder e-förmig in eine Raumform gebogen, in der die jeweils einander zugeordneten Kondensatorbeläge mittels einer Abstandshalterung in einem festen Abstand voneinander gehalten werden und durch Aussparungen das Medium eindringen bzw. hindurchströmen und als Dielektrikum wirken kann. Auf einfachste Weise können ein oder mehrere Kondensatoren auf eine Leitfolie in die Sensoranordnung integriert werden, indem die Leitfolie entsprechend oft und vorzugsweise beidseitig Kondensatorbeläge aufweist. Die Leitfolie kann zusätzlich im Bereich der Kondensatorbeläge versteift, durch Träger oder verscheiden lange Befestigungsstifte arretiert und mit zusätzlichen Mitteln zum Abschirmen äußerer Störfelder versehen werden.

## Beschreibung

Die Erfindung betrifft eine kapazitive Sensoranordnung für ein als Dielektrikum wirkendes flüssiges oder gasförmiges Medium.

Kapazitive Sensoranordnungen gemäß dem Stand der Technik werden als Röhrenkondensatoren oder Plattenkondensatoren ausgeführt.

Aufgabe der Erfindung ist es, eine kapazitive Sensoranordnung vorzustellen, die sehr einfach und preiswert herstellbar ist und dennoch eine relativ genaue Messung ermöglicht. Diese Aufgabe wird durch die kennzeichnenden Merkmale des Patentanspruchs 1 gelöst. Vorteilhafte Weiterbildungen der Erfindung sind den Unteransprüchen zu entnehmen.

Grundgedanke der Erfindung es, die Kondensatorbeläge auf einer Leitfolie anzuordnen, die zumindest zwischen den Kondensatorbelägen einen flexibel biegsamen Bereich aufweist, so daß die Leitfolie in einer Ebene mit den Kondensatorbelägen und weiteren Elementen, insbesondere auch Leitbahnen zu den Kondensatorbelägen versehen werden kann. Nachfolgend wird die Leitfolie U- bzw. S- förmig in eine Raumform gebogen, in der die jeweils einander zugeordneten Kondensatorbeläge mittels einer Abstandshalterung in einem festen Abstand voneinander gehalten werden und durch Aussparungen in dieser das Medium eindringen bzw. hindurchströmen und als Dielektrikum wirken kann. Auf einfachste Weise können eine oder mehrere Kondensatoren auf eine Leitfolie in die Sensoranordnung integriert werden, indem die Leitfolie entsprechend oft und gegebenenfalls beidseitig Kondensatorbeläge aufweist.

Die Leitfolie kann als flexible Leitfolie ausgeführt und dabei zur zusätzlichen Fixierung im Bereich der im gebogenen Zustand in der Mitte liegenden Kondensatorbeläge versteift sein oder aber als eine Starr-Flex-Leitfolie mit starren Segmenten versehen sein, auf denen jeweils die Kondensatorbeläge angeordnet sind und die über flexible Bereiche untereinander biegsam miteinander verbunden sind. Durch äußere Träger mit Befestigungsstiften wird neben einer Lagefixierung für die Leitfolie und Abstandhalterung(en) auch ein Schutz der Sensoranordnung erreicht.

Die Erfindung wird nachfolgend anhand von Ausführungsbeispielen und Figuren näher erläutert. Kurze Beschreibung der Figuren:
- Figur 1: Vorder- und Rückseite der Leitfolie in der Ebene
- Figur 2: Schnittskizze durch die Sensoranordnung in der Raumform
- Figur 3: Außengehäuse der Sensoranordnung mit Öffnungen für das Medium
- Figur 4: Schnitt (A-A) durch eine Sensoranordnung mit Trägern mit Führungsschienen und entsprechenden Nuten im Außengehäuse
- Figur 5: Schnitt durch ein Ausführungsbeispiel mit seperat eingelegten Abstandhaltern
- Figur 6: Schnitt durch ein Ausführungsbeispiel mit S-förmig gebogenen Leitfolie und Befestigungsstiften als Abstandhalter
- Figur 7: Schnitt durch eine Sensoranordnung mit e-förmig gebogener Leitfolie
- Figur 8: Schnitt (B-B) durch die Sensoranordnung mit unterschiedlich langen Befestigungsstiften zur Abstützung der Leitfolie in der Raumform

Die Figuren zeigen eine besonders bevorzugte Ausgestaltung der Leitfolie 1 mit zwei beidseitig einer Leitfolie 1 angeordneten Kondensatoren C1 und C2, die S-förmig in eine Raumform gebogen werden, sowie zusätzlichen Abschirmungsmitteln. Selbstverständlich ist eine einfachere Kondensatoranordnung möglich, beispielsweise durch eine einseitige Ausführung der Kondensatorbeläge auf der Leitfolie und U-förmige Biegung dieser.

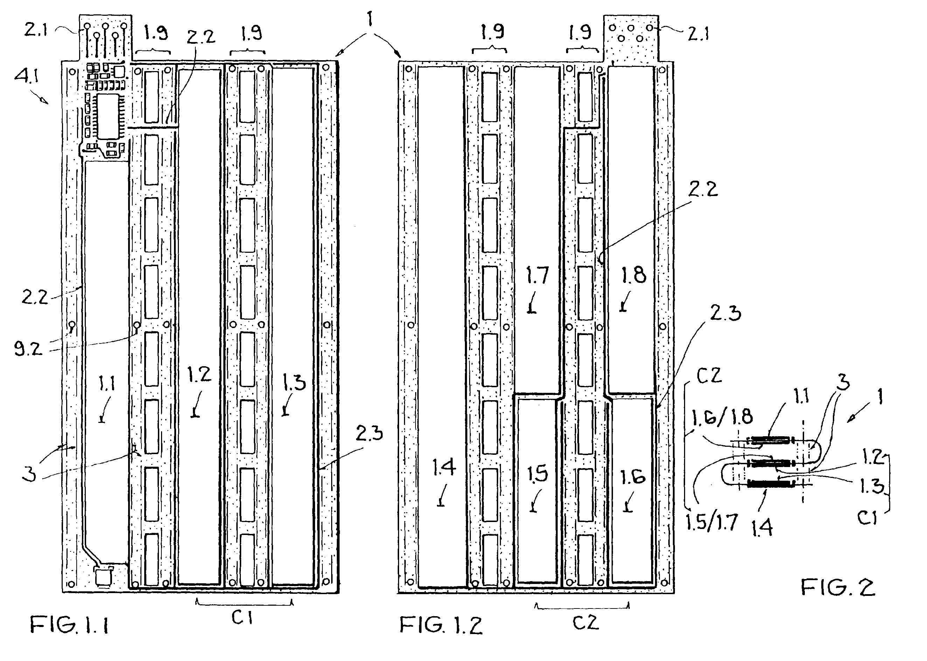

Figur 1 .1 zeigt die Vorderseite und Figur 1.2 die Rückseite einer Leitfolie 1, auf der beidseitig Kondensatorbeläge 1.2 und 1.3 für C1 sowie 1.5 und 1.6 für C2 angeordnet sind. Darüber hinaus sind zusätzlich Metallbeläge 1.1, 1.4, 1.7 und 1.8 vorgesehen, die als Abschirmung dienen und die auf ein Bezugspotential, beispielsweise auf Massepotential, geschaltet sind. Der zweite Kondensator C2 ist in diesem Ausführungsbeispiel mit kleineren Kondensatorflächen ausgebildet und dient als Referenzkondensator zur Bestimmung der Dielektrizität des Mediums, wobei auch andere Ausgestaltungen ohne weiteres denkbar sind. Die Beschaltung der Kondensatorbeläge und zusätzlichen Metallbeläge zur Abschirmung erfolgt über Leitbahnen 2.2, die zu einer Auswerteschaltung 4.1 bzw. einem äußeren Anschlußbereich 2.1 der Leitfolie 1 führen. Außerdem sind in diesem Ausführungsbeispiel des weiteren um die Kondensatorbeläge 1.2, 1.3, 1.5, 1.6 weitgehend metallische Bahnen 2.3 geführt, die die Kondensatorbeläge zusätzlich seitlich abschirmen, wobei diese zum Teil für die Leiterbahnen 2.2 unterbrochen werden müssen oder aber zusätzliche Brücken verdeckt auf der jeweils anderen Seite der Leitfolie 1 vorgesehen werden müssen. Durchkontaktierungen von der Vorder- auf die Rückseite der Leitfolie 1 sind ohne weiteres und an verschiedenen Stellen denkbar. Die Leitfolie 1 kann mit zusätzlichen Bauelementen, beispielsweise Sensoren für die Temperatur oder andere Parameter des zu messenden Mediums versehen werden, wie in Figur 1.1 auf der Lage der Abschirmung 1.1 durch den skizzenhaft angedeuteten Ölqualitätssensor verdeutlicht wird.

Die flexibel biegsamen Bereiche 1.9 zwischen den einzelnen Kondensatorbelägen bzw. den zusätzlichen Metallbelägen 1.1, 1.4 zur Abschirmung können durch eine Verjüngung der flexiblen Leitfolie 1 gegenüber den Bereichen mit den Kondensatorbelägen gebildet werden und zusätzlich durch eine Perforation noch elastischer ausgeformt werden, wie dies in den Figuren 1.1 und 1.2 skizziert wurde. Andererseits können die Bereiche mit den Kondensatorbelägen starr ausgeführt sein, beispielsweise als starre Segmente einer Starr-Flex-Leitfolie oder durch eine zusätzliche Versteifung dieser Bereiche, wie sie zumindest für denjenigen Bereich äußerst vorteilhaft ist, der im gebogenen Zustand in der Mitte liegt, und somit nicht durch zusätzliche Trägerplatten fixiert werden kann.

In den Figur 1.1 und 1.2 sind bereits die Abstandshalter 3 gestrichelt angedeutet, die in der Raumform gemäß Figur 2 dafür sorgen, daß die einander zugeordneten Kondensatorbeläge 1.2 und 1.3 für C1 sowie 1.5 und 1.6 für C2 in einem vorgegebenen Abstand gehalten werden. Neben der Rechteckform der Kondensatorbeläge sind grundsätzlich auch andere Ausformungen gemäß dem Stand der Technik denkbar, beispielsweise sich verjüngende Trapez- oder Dreiecksformen.

Die Figur 2 zeigt, wie bereits im Zusammenhang mit den Figuren 1.1 und 1.2 erwähnt, die Raumform der Leitfolie 1, wobei die Kondensatorbeläge 1.2 und 1.4 für C1 und 1.5 und 1.6 für C2 einander beabstandet gegenüber liegen . Die Abstandhalter 3 sind gestrichelt angedeutet. Die Metallbeläge 1.1 und 1.4 sind nach außen gerichtete und sollen die Sensoranordnung gegen äußere Störfelder abschirmen.

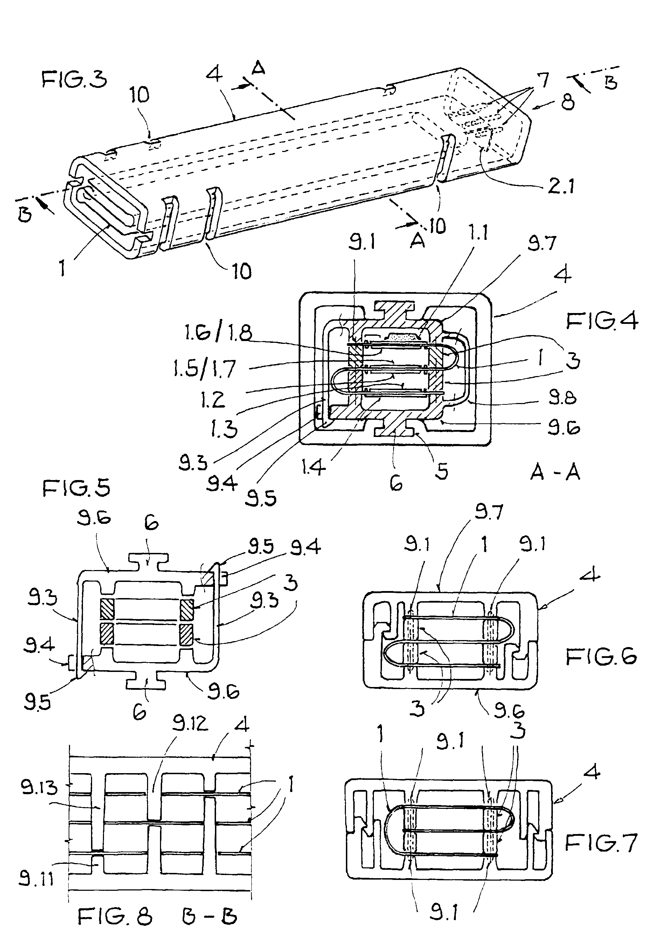

Eine mögliche Ausführung des Außengehäuses der Sensoranordnung wird in Fig. 3 dargestellt. Die gezeigte kapazitive Sensoranordnung kann beispielsweise zur Füllstandsmessung eingesetzt werden, in dem diese mit dem Außengehäuse 4 senkrecht stehend auf dem Boden eines zumindest teilweise mit dem zu messenden Medium gefüllten Behältnisses angeordnet wird und das Medium über untere Öffnungen 10 im Außengehäuse 4 und in der Sensoranordnung einströmen kann. und durch die oberen Öffnungen ein Druckausgleich möglich ist, so daß sich der Füllstand in dem von den Abstandshaltern 3 gebildeten Hohlraum zwischen den jeweils zugeordneten Kondensatorbelägen 1.2 und 1.3 bzw. 1.5 und 1.6 an den Füllstand außerhalb anpassen kann. Die auf den Boden gerichteten Öffnungen 10 des Außengehäuses 4 ermöglichen, daß bis zum Boden hin gemessen werden kann, sofern geeignete Meßverfahren eingesetzt werden.

Der äußere Bereich 2.1 der Leitfolie 1, der in Figur 1.1 besonders gut erkennbar ist, wird in einen Steckerbereich 8 umgebogen und ist dort über Kontaktstifte 7 kontaktierbar, wie in Figur 3 skizziert.

Figur 4 zeigt nun einen Schnitt durch eine Ausführungsform der Sensoranordnung in der Raumform. Die Leitfolie 1 wird zwischen zwei äußeren Trägern 9.6 und 9.7 sowie den Abstandshalter 3 gehalten und ist dabei in den flexiblen Bereichen 1.9 zu einer S-Form gebogen. Die einander zugeordneten Kondensatorbeläge 1.2 und 1.3 für C1 sowie 1.5 und 1.6 für C2 liegen in der Raumform dann beabstandet einander gegenüber. Die Abstandshalter 3 sind als Befestigungsstifte ausgebildet und weisen im Bereich der Kondensatorbeläge, also in diesem Fall mittig, vollständige Aussparungen auf, bilden also einen Hohlraum, in den das Medium eindringen oder hindurchströmen kann. Bei Abstandhaltern 3 in Blockform gemäß Figur 5 können zusätzlich noch weitere Aussparungen vorgesehen sein, durch die das Medium ein - und ausströmen kann bzw. ein Druckausgleich zur Anpassung des Füllstands des Mediums im Hohlraum an den Füllstand außerhalb ermöglicht. Diese weiteren Aussparungen können beispielsweise am oberen und unteren Ende der Sensoranordnung sein. In Figur 4 sind die Befestigungsstifte 9.1 erkennbar, an denen die Leitfolie 1 sowie die Abstandshalterungen 3 mit entsprechenden Öffnungen fixiert sind. Die Befestigungsstifte 9.1 sind an zumindest einem der äußeren Träger 9.6 und 9.7 angeordnet. Die Träger 9.6 und 9.7 sind in diesem Ausführungsbeispiel einerseits in einem biegsamen Bereich 9.8 und andererseits über einen gebogenen Haken 9.3 mit einer Rastspitze 9.5 und eine Rastöffnung 9.4 als Arretierungsmittel miteinander verbunden, wobei der biegsame Bereich 9.8 im gebogenen Zustand eine Rückstellkraft aufweist, die die Arretierungsmittel 9.3, 9.4, 9.5 zusätzlich spannt. Über Führungsschienen 6 an den Trägern 9.6 und 9.7 und Führungsnuten 5 ist die Sensoranordnung in einem Außengehäuse 4 montiert.

Der in der Raumform mittlere Bereich in Figur 4, also die Kondensatorbeläge 1.2 und 1.5 gemäß der Figur 1 und 2, kann zusätzlich versteift sein, damit er sich durch die Schwerkraftwirkung oder beim Montieren nicht in eine Richtung durchbiegen kann.

Die Figur 5 skizziert eine weitere Alternative der Arretierung der Trägerplatten 9.6 und 9.7 durch beidseitige Ausführung mit gebogenen Haken 9.3 mit Rastspitze 9.5 und Rastöffnungen 9.4 als Arretierungsmittel. Auf die Darstellung der Leitfolie 1 und die Abstandhalter 3 wurde verzichtet. Dabei werden in diesem Ausführungsbeispiel separate Abstandshalter 3 verwendet, durch die die Befestigungsstifte 9.1 hindurchgeführt werden können und die zusätzliche Strömungsöffnungen für das Medium aufweisen. Die Figur 6 zeigt wiederum eine beidseitige Ausführung von Arretierungsmitteln, diesmal jedoch mit Befestigungsstiften 9.1, die die Leitfolie 1 sowohl horizontal als auch vertikal fixieren, wie anhand von Figur 8 noch näher erläutert wird.

Die Figur 7 zeigt eine weitere Variante der Sensoranordnung, bei der die Leitfolie 1 e-förmig, also zweifach ineinander U-förmig gebogen ist. Der in der Raumform mittlere Bereich mit den Kondensatorbelägen 1.2 und 1.5 befindet sich dabei in der Ebene nicht mittig wie in der Figur 1 sondern an einem Ende. Der Vorteil dieser Ausgestaltung liegt darin, daß die Leitfolie 1 die Träger 9.6 und 9.7 gemeinsam auf einer Seite aufweist, was die Herstellung etwas vereinfachen kann.

Figur 8 zeigt eine Ausgestaltung der Erfindung, bei der Befestigungsstifte .911,9.12 und 9.13 unterschiedliche Länge eingesetzt werden, wobei die mittleren Befestigungsstifte 9.12 jeweils die in der Raumform mittlere Lage der Leitfolie 1 fixieren, währenddessen die langen Befestigungsstifte 9.13 die in der Raumform auf der entgegengesetzten Seite liegende äußere Lage fixieren. Zusätzlich können kurze Befestigungstifte 9.11 vorgesehen werden, wenn die Leitfolie auch mit den Außenlagen beabstandet werden soll von den Trägern 9.6 und 9.7. Die Befestigungsstifte 9.11 bis 9.13 werden dabei vorzugsweise immer abwechselnd versetzt angeordnet und fixieren die Leitfolie 1 somit bürstenähnlich, bieten dennoch genügend Raum für das durchströmende Medium.

Die einander zugewandten Befestigungsstifte (9.11 - 91.13 bzw. 9.12-9.12) können miteinander durch die Öffnung 9.2 in der Leitfolie über einen dünnen Stift verbunden sein, wodurch eine zusätzliche horizontale Fixierung der mittleren Lage der Leitfolie 1 erreicht wird. Die äußeren Lagen weisen für die durch sie hindurchgehenden Befestigungsstifte 9.12 und 9.13 jeweils entsprechend größere Öffnungen 9.2 auf.

Zur Vermeidung einer Blindmontage der Leitfolie 1 können anstelle dessen auch die Abstandhalter 3 mit Befestigungsstiften versehen werden, so daß die Leitfolie 1 erst um die Abstandhalter 3 in die Raumform gelegt und fixiert und nachfolgend auf den einen Träger 9.6 montiert und dann durch den oberen Träger 9.7 wie zwei Haibschalen verschlossen wird.

## Patentansprüche

1. Kapazitive Sensoranordnung für ein als Dielektrikum wirkendes flüssiges oder gasförmiges Medium, dadurch gekennzeichnet, daß auf einer Leitfolie (1) ein erster Kondensatorbelag (1.2) und auf der gleichen Seite beabstandet und elektrisch isoliert dazu ein zweiter Kondensatorbelag (1.3) angeordnet ist,
wobei die Leitfolie (1) zumindest zwischen beiden Kondensatorbelägen einen flexibel biegsamen Bereich (1.9) aufweist, in dem die Leitfolie (1) U-förmig gebogen ist, und
zwischen den beiden Kondensatorbelägen (1.2,1.3) eine Abstandhalterung (3) aus nichtleitendem Material mit Aussparungen für das strömende Medium vorgesehen ist.

2. Sensoranordnung nach Anspruch 1, dadurch gekennzeichnet, daß mehrere Sensoren (C1,C2) auf der Leitfolie (1) räumlich parallel nebeneinander angeordnet sind, indem die Leitfolie zumindest teilweise beidseitig mit Kondensatorbelägen (1.2,1.3,1.5,1.6) jeweils unterschiedlicher kapazitiver Sensoren (C1,C2) versehen ist, die Leitfolie (1) entsprechend mehrfach U- bzw. S- oder e-förmig gebogen und zwischen den Kondensatorbelägen gleicher Sensoren Abstandhalterungen (3) angeordnet ist.

3. Sensoranordnung nach Anspruch 2, dadurch gekennzeichnet, daß die Leitfolie (1) zumindest im Bereich der im gebogenen Zustand in der Mitte liegenden Kondensatorbeläge (1.2,1.5) versteift ist.

4. Sensoranordnung nach einem der vorangehenden Ansprüche, dadurch gekennzeichnet, daß die Leitfolie (1) jeweils im Bereich der Kondensatorbeläge (1.2,1.3,1.5,1.6) versteift ist.

5. Sensoranordnung nach einem der vorangehenden Ansprüche, dadurch gekennzeichnet, daß die Leitfolie (1) Mittel zur Abschirmung gegen äußere Störfelder aufweist.

6. Sensoranordnung nach Anspruch 5, dadurch gekennzeichnet, daß die Leitfolie (1) auf den je nach Raumform jeweils nach außen gerichteten Seitenflächen zusätzliche Metallbeläge (1.1,1.4) zur Abschirmung aufweist, die auf ein Bezugspotential geschaltet sind.

7. Sensoranordnung nach Anspruch 5 oder 6, dadurch gekennzeichnet, daß die Leitfolie (1) um die Kondensatorbeläge (1.2,1.3,1.5,1.6) zumindest teilweise umrandende metallische Bahnen zur seitlichen Abschirmung aufweist, die von den Kondensatorbelägen isoliert und auf ein Bezugspotential geschaltet sind.

8. Sensoranordnung nach einem der vorangehenden Ansprüche 2 bis 7, dadurch gekennzeichnet, daß diejenige zwei Kondensatorbeläge (1.2,1.5), die in der Raumform in der Mitte beidseitig der Leitfolie (1) liegen, auf das gleiche Potential geschaltet sind.

9. Sensoranordnung nach einem der vorangehenden Ansprüche, dadurch gekennzeichnet, daß äußere Träger (9.6,9.7) vorgesehen sind, von denen zumindest einer mit senkrecht dazu stehenden Befestigungsstiften (9.1) und die Leitfolie (1) und die Abstandhalterung(en) (3) über entsprechende Öffnungen (9.2) für diese Befestigungsstifte (9.1) lagefixiert sind.

10. Sensoranordnung nach Anspruch 9, dadurch gekennzeichnet, daß beide Träger zueinander versetzt zumindest mittlere und lange Befestigungsstifte (9.12,9.13) aufweisen, wobei die mittleren Befestigungsstifte die in der Raumform mittlere Lage der Leitfolie (1) und die langen Befestigungsstifte die in der Raumform jeweils entgegengesetzt liegende äußere Lage der Leitfolie fixieren.

11. Sensoranordnung nach einem der vorangehenden Ansprüche, dadurch gekennzeichnet, daß die äußeren Träger (9.6,9.7) über äußere Arretierungsmittel (9.3,9.4,9.5) miteinander verbunden sind.
